# EUROPEAN PATENT APPLICATION

(11) **EP 4 611 104 A1**
(43) Date of publication of application: **03.09.2025**
(21) Application number: 23916639.0
(22) Date of filing: 16.01.2023
(51) Int. Cl.: H01M 10/0568

(54) **NON-AQUEOUS ELECTROLYTE, SODIUM-ION BATTERY CONTAINING SAME, AND ELECTRICAL APPARATUS**

(71) Applicant: Contemporary Amperex Technology (Hong Kong) Limited, Central (HK)
(72) Inventor: TIE, Zhiwei, Ningde, Fujian 352100 (CN); ZOU, Hailin, Ningde, Fujian 352100 (CN); CHEN, Peipei, Ningde, Fujian 352100 (CN)
(74) Representative: Gong, Jinping
(86) International application number: PCT/CN2023/072330
(87) International publication number: WO 2024/152146

(57) **Abstract**

This application provides a non-aqueous electrolyte. The non-aqueous electrolyte includes: a first sodium salt, where the first sodium salt includes at least one of sodium hexafluorophosphate, sodium hexafluoroarsenate, sodium perchlorate, and sodium trifluoroacetate; and a second sodium salt, where the second sodium salt includes one, two, or more of a sodium salt having sulfonate, a sodium salt having oxalate, a sodium salt having phosphate, and a sodium salt having borate. The non-aqueous electrolyte provided in this application is applicable to sodium-ion batteries, can improve the room-temperature and high-temperature cycling performance and capacity retention rate after high-temperature storage of the sodium-ion batteries, and can significantly reduce the battery volume swelling rate after high-temperature storage of the sodium-ion batteries.

## Description

### TECHNICAL FIELD

This application relates to a non-aqueous electrolyte. The non-aqueous electrolyte includes at least two sodium salts, where a first sodium salt includes at least one of sodium hexafluorophosphate, sodium hexafluoroarsenate, sodium perchlorate, and sodium trifluoroacetate; and a second sodium salt includes one, two, or more of a sodium salt having sulfonate, a sodium salt having oxalate, a sodium salt having phosphate, and a sodium salt having borate. In addition, this application further relates to a sodium-ion battery and electric apparatus including the non-aqueous electrolyte.

### BACKGROUND

To achieve the national "dual carbon" strategic goals, the utilization of new energy resources has become particularly important. With high energy density, lithium-ion batteries have shown good development prospects in fields such as mobile phones, computers, electric vehicles, and portable electronic devices. However, since lithium resources are finite and unevenly distributed around the world, and the price of the lithium resources (such as lithium carbonate) has been rapidly increased in recent years, resource and cost issues will limit the large-scale and long-term use of the lithium-ion batteries. Therefore, further development of new battery systems with high performance and low costs has significant research importance.

Compared with the lithium resources, sodium resources are more abundant in the Earth's crust, ranking sixth in abundance. Moreover, the sodium resources are relatively evenly distributed in the Earth's crust and exist all over the world. Therefore, the utilization of the sodium resources will not be severely limited by reserves and geographical locations. More importantly, the sodium resources have low costs and are suitable for large-scale and long-term use. Therefore, in terms of resource and cost issues, sodium-ion batteries have greater advantages than the lithium-ion batteries. In addition, metallic sodium and lithium have similar physical and chemical properties. Therefore, the sodium-ion batteries can to some extent draw on the development experience of the lithium-ion batteries and follow their production processes.

Sodium-ion batteries show good development prospects in the field of electrochemical energy storage, and the industrial development of the sodium-ion batteries has significant strategic importance and economic value.

### SUMMARY

This application has been made in view of the above issues, with an objective to provide a non-aqueous electrolyte and a sodium-ion battery and electric apparatus including such non-aqueous electrolyte. The non-aqueous electrolyte is applicable to sodium-ion batteries, can improve the high-temperature cycling performance and capacity retention rate after high-temperature storage of the sodium-ion batteries, and can significantly reduce the battery volume swelling rate after high-temperature storage of the sodium-ion batteries.

To achieve the above objective, a first aspect of this application provides a non-aqueous electrolyte. The non-aqueous electrolyte includes:
a first sodium salt, where the first sodium salt includes at least one of sodium hexafluorophosphate (NaPF₆), sodium hexafluoroarsenate (NaAsF₆), sodium perchlorate (NaClO₄), and sodium trifluoroacetate (CF₃COONa), and optionally, the first sodium salt is sodium hexafluorophosphate; and
a second sodium salt, where the second sodium salt includes one, two, or more of a sodium salt having sulfonate, a sodium salt having oxalate, a sodium salt having phosphate, and a sodium salt having borate, and optionally, the second sodium salt includes a sodium salt having sulfonate, a sodium salt having oxalate, a sodium salt having phosphate, and a sodium salt having borate.

The non-aqueous electrolyte is obtained by dissolving electrolytic sodium salts containing electron-rich anions in a non-aqueous solvent. As described above, the first sodium salt and the second sodium salt are selectively added, so that the solvation structure of sodium ions and the chemical environment of solvent molecules in the electrolyte can be regulated, thereby solving the gas generation problem caused by continuous decomposition of the solvent in a sodium-ion battery.

In any embodiment, in the non-aqueous electrolyte, a molar concentration ratio of the first sodium salt to the second sodium salt is greater than or equal to 1/1, optionally greater than or equal to 3/1 and less than or equal to 40/1, and more optionally less than or equal to 15/1.

In the entire electrolyte, the molar concentration ratio of the first sodium salt to the second sodium salt is within the above range, which can reduce the risk of excessive film formation on an electrode surface and alleviate the transport resistance of sodium ions at an electrode/electrolyte interface, thereby causing a small effect on the kinetic process of the sodium-ion battery.

In any embodiment, the sodium salt having sulfonate includes at least one of sodium fluorosulfonate (FSO₃Na), sodium trifluoromethanesulfonate (NaSO₃CF₃), sodium bis(fluorosulfonyl)imide (Na[(FSO₂)₂N]), sodium bis(trifluoromethanesulfonyl)imide (Na[(CF₃SO₂)₂N]), sodium methanesulfonate (CH₃SO₃Na), sodium vinylsulfonate (C₂H₃NaO₃S), sodium methanesulfate (CH₃OSO₃Na), sodium methanethiosulfonate (CH₃NaO₂S₂), sodium 1,2-ethanediyl disulfonate (NaO₃SCH₂CH₂SO₃Na), sodium ethylsulfate (C₂H₅NaO₄S), sodium propanesulfonate (C₃H₇NaO₃S), sodium ethylthiosulfonate (C₂H₅NaO₂S₂), sodium 2-iodobenzenesulfonate (C₆H₄INaO₃S), sodium 4-nitrobenzenesulfonate (C₇H₆NNaO₅S), sodium styrenesulfonate (C₈H₇NaO₃S), sodium 4-isopropylbenzenesulfonate (C₉H₁₁NaO₃S), sodium phenolsulfonate (C₆H₅NaO₄S), sodium β-styrenesulfonate (C₈H₇NaO₃S), sodium cyclohexanesulfonate (C₆H₁₁NaO₃S), sodium 2-cyclohexylaminoethanesulfonate (C₈H₁₆NNaO₃S), sodium 4-amino-N-methylbenzenesulfonamide (C₇H₁₀N₂O₂S), sodium poly(dithiodipropanesulfonate) (C₆H₁₂Na₂O₆S₄), sodium pyridin-3-sulfonate (C₃H₄NNaO₂S), and sodium piperazine-1,4-diethanesulfonate (C₈H₁₇N₂NaO₆S₂); and optionally, the sodium salt having sulfonate includes at least one of sodium fluorosulfonate, sodium trifluoromethanesulfonate, sodium bis(fluorosulfonyl)imide, sodium bis(trifluoromethanesulfonyl)imide, sodium methanesulfonate, and sodium methanesulfate.

In any embodiment, a concentration of the sodium salt having sulfonate in the non-aqueous electrolyte is within a range of 0.0005-1 mol/L, optionally within a range of 0.01-0.3 mol/L.

In the second sodium salt, the concentration of the sodium salt having sulfonate in the electrolyte is greater than or equal to 0.0005 mol/L, which can improve the stability of the first sodium salt in the electrolyte and allow the sodium-ion battery to form a stable solid electrolyte interface film on the electrode surface in an electrochemical reaction process, thereby effectively suppressing decomposition and gas generation of the solvent in the electrolyte on the electrode surface, and improving the electrochemical performance of the sodium-ion battery (especially at high temperatures). Optionally, the concentration of the sodium salt having sulfonate in the electrolyte may be greater than or equal to 0.01 mol/L. In addition, the concentration of the sodium salt having sulfonate in the electrolyte being less than or equal to 0.3 mol/L can more effectively reduce the risk of excessive film formation on an electrode, thus not significantly affecting the electrochemical performance of the sodium-ion battery at high temperatures. Optionally, the concentration may be less than or equal to 0.15 mol/L.

In any embodiment, the sodium salt having oxalate includes at least one of sodium oxalate (Na₂C₂O₄), sodium bis(oxalate)borate (C₄BNaO₈), sodium difluoro(oxalate)borate (C₂BF₂NaO₄), sodium tetrafluoro(oxalate)phosphate (C₂F₄NaO₄P), and sodium difluoro bis(oxalate)phosphate (C₄F₂NaO₈P).

In any embodiment, a concentration of the sodium salt having oxalate in the non-aqueous electrolyte is within a range of 0.0005-0.1 mol/L, optionally within a range of 0.006-0.08 mol/L, and further optionally within a range of 0.01-0.02 mol/L.

In the second sodium salt, the concentration of the sodium salt having oxalate in the electrolyte is greater than or equal to 0.0005 mol/L, which can significantly improve the stability of the first sodium salt in the electrolyte and facilitate the improvement of the high-temperature cycling performance and capacity retention rate after storage of the sodium-ion battery. Optionally, the concentration may be greater than or equal to 0.006 mol/L, further optionally greater than or equal to 0.01 mol/L. In addition, the concentration is preferably less than or equal to 0.08 mol/L, which can more effectively reduce the possibility of excessive film formation of the sodium salt having oxalate on the electrode, thus not significantly affecting the kinetic process of the sodium-ion battery during charge and discharge.

In any embodiment, the sodium salt having phosphate includes at least one of sodium difluorophosphate (NaPO₂F₂), sodium monofluorophosphate (Na₂PO₃F), sodium trimetaphosphate (Na₃P₃O₉), sodium hexametaphosphate (Na₆P₆O₁₈), sodium hydroxyethane diphosphonate (C₂H₇NaO₇P₂), clodronate disodium (CH₂Cl₂Na₂O₆P₂), olpadronate sodium (C₅H₁₅NO₇P₂), sodium diethylenetriamine penta(methylenephosphonate) (C₉H₁₈N₃Na₁₀O₁₅P₅), sodium tripolyphosphate (Na₅P₃O₁₀), and disodium phenyl phosphate (C₆H₅Na₂O₄P); and optionally, the sodium salt having phosphate includes at least one of sodium difluorophosphate (NaPO₂F₂) and sodium fluorophosphate (Na₂PO₃F).

In any embodiment, a concentration of the sodium salt having phosphate in the non-aqueous electrolyte is within a range of 0.0005-0.12 mol/L, optionally within a range of 0.01-0.05 mol/L, and more optionally within a range of 0.01-0.03 mol/L.

In the second sodium salt, a molar concentration of the sodium salt having phosphate in the non-aqueous electrolyte is greater than or equal to 0.0005 mol/L, which can improve the stability of the first sodium salt in the electrolyte and allow the sodium-ion battery to form a thin and firm solid electrolyte film mainly composed of inorganic components on the electrode surface in a formation process. This can significantly suppress gas generation in the sodium-ion battery. Optionally, the concentration is greater than or equal to 0.01 mol/L. In addition, the concentration being less than or equal to 0.12 mol/L can effectively reduce the possibility of excessive film formation of the sodium salt having phosphate on the electrode surface, thus not significantly affecting the kinetic process of the sodium-ion battery during charge and discharge.

In any embodiment, the sodium salt having borate includes at least one of sodium tetrafluoroborate (NaBF₄), sodium metaborate (BNaO₂), sodium tetraphenylborate ((C₆H₅)₄BNa), and sodium tetrakis[3,5-bis(trifluoromethyl)phenyl]borate (C₃₂H₁₂BF₂₄Na); optionally, the sodium salt having borate includes at least one of sodium tetrafluoroborate, sodium metaborate, and sodium tetraphenylborate; and further optionally, the sodium salt having borate includes at least one of sodium tetrafluoroborate and sodium metaborate.

In any embodiment, a concentration of the sodium salt having borate in the non-aqueous electrolyte is within a range of 0.0005-0.05 mol/L, optionally within a range of 0.01-0.04 mol/L.

In the second sodium salt, a molar concentration of the sodium salt having borate in the non-aqueous electrolyte is greater than or equal to 0.0005 mol/L, which can improve the stability of the first sodium salt in the electrolyte to some extent and allow the sodium-ion battery to form a thin and dense solid electrolyte interface film on the electrode surface, thereby suppressing continuous decomposition of the solvent in the electrolyte at the electrode/electrolyte interface. Thus, this significantly suppresses gas generation in the sodium-ion battery and also improves the cycling performance (especially at high temperatures) and capacity retention rate after high-temperature storage of the sodium-ion battery. In addition, the concentration being less than or equal to 0.05 mol/L can effectively reduce the possibility of excessive film formation of the sodium salt having borate on the electrode surface, thus not significantly affecting the kinetic process of the sodium-ion battery during charge and discharge.

In any embodiment, in the first sodium salt, when sodium hexafluorophosphate is used in combination with at least one of sodium hexafluoroarsenate, sodium perchlorate, and sodium trifluoroacetate, a concentration of other sodium salts than sodium hexafluorophosphate in the non-aqueous electrolyte is greater than or equal to 0.001 mol/L, optionally greater than or equal to 0.01 mol/L, further optionally greater than or equal to 0.03 mol/L and less than or equal to 1 mol/L, and optionally less than or equal to 0.5 mol/L.

In the first sodium salt, if the concentration of other sodium salts than sodium hexafluorophosphate (NaPF₆) in the non-aqueous solvent is greater than or equal to 0.001 mol/L, the electrochemical performance of the sodium-ion battery at high temperatures can be improved. If the concentration of other sodium salts in the non-aqueous solvent is less than or equal to 1 mol/L, the solvation structure of sodium ions and the chemical environment of non-aqueous solvent molecules in the electrolyte can be regulated to some extent, suppressing decomposition and gas generation of the electrolyte under high-temperature conditions, and facilitating the improvement of the electrochemical performance of the sodium-ion battery at high temperatures.

In any embodiment, the second sodium salt includes a sodium salt having sulfonate and further includes at least one of a sodium salt having oxalate, a sodium salt having phosphate, and a sodium salt having borate.

In the second sodium salt, the combined use of the sodium salt having sulfonate with at least one of the sodium salt having oxalate, the sodium salt having phosphate, and the sodium salt having borate can generate a synergistic effect to jointly participate in the solvation process of sodium ions in the electrolyte and provide some electrons to the sodium ions. This can effectively suppress the strong electron attraction capability of the sodium ions on the non-aqueous solvent molecules and significantly suppress the continuous decomposition and gas generation of the electrolyte. In addition, the combined use of the sodium salt having sulfonate with at least one of the sodium salt having oxalate, the sodium salt having phosphate, and the sodium salt having borate can form a thin and dense solid electrolyte interface film rich in inorganic components at the electrode/electrolyte interface, significantly improving the electrochemical performance of the sodium-ion battery (especially at high temperatures).

In any embodiment, the second sodium salt includes a sodium salt having sulfonate and a sodium salt having oxalate; and optionally, a molar ratio of the sodium salt having sulfonate to the sodium salt having oxalate is 0.03/1 to 70/1, optionally 0.5/1 to 20/1.

The combined use of the sodium salt having oxalate with the sodium salt having phosphate and the sodium salt having borate improves the effect of suppressing decomposition and gas generation of the electrolyte. The molar ratio of the sodium salt having sulfonate to the sodium salt having oxalate being 1/1 to 10/1 leads to a high possibility of forming a thin solid electrolyte interface film mainly composed of inorganic components on the electrode surface of the sodium-ion battery during charge and discharge.

In any embodiment, the non-aqueous electrolyte includes cyclic carbonate, where a mass concentration percentage of the cyclic carbonate in the non-aqueous electrolyte is greater than or equal to 10%, optionally greater than or equal to 15% and less than or equal to 60%.

The mass concentration percentage of the cyclic carbonate in the non-aqueous electrolyte being within the above range can improve the stability of the electrode/electrolyte interface film of the sodium-ion battery under high-temperature conditions to some extent, without substantially affecting the migration speed of the sodium ions.

In any embodiment, the non-aqueous electrolyte includes linear carbonate and linear carboxylate, where a sum of mass percentages of the linear carbonate and the linear carboxylate in the non-aqueous electrolyte is greater than or equal to 40%, optionally greater than or equal to 50%, more optionally greater than or equal to 60% and less than or equal to 90%, optionally less than or equal to 85%, and further optionally less than or equal to 80%.

When the sum of the mass percentages of the linear carbonate and linear carboxylate in the electrolyte is greater than or equal to 40%, optionally greater than or equal to 50%, more optionally greater than or equal to 60%, the viscosity of the electrolyte is not excessively high. When the upper limit of the sum of the mass percentages of the linear carbonate and linear carboxylate in the electrolyte is less than or equal to 90%, optionally less than or equal to 85%, and further optionally less than or equal to 80%, the decrease in ionic conductivity is not significant, and the electrochemical performance of the sodium-ion battery is less affected.

In any embodiment, the non-aqueous electrolyte includes at least one cyclic carbonate and at least one linear ester, where a mass percentage ratio of the at least one cyclic carbonate to the at least one linear ester is greater than or equal to 0.1:1 and less than or equal to 1.5:1, optionally less than or equal to 1:1, and more optionally 0.2:1 to 1:1.

The mass percentage ratio of the cyclic carbonate to the linear ester in the non-aqueous electrolyte of this application being within the above range can suppress decomposition and gas generation of the electrolyte in the sodium-ion battery at high temperatures to some extent and facilitate the improvement of the electrochemical performance of the sodium-ion battery to some extent.

In any embodiment, the non-aqueous electrolyte includes at least one of the following substance combinations: a combination of cyclic carbonate and linear carbonate; a combination of cyclic carbonate and linear carboxylate; a combination of cyclic carbonate and ether; a combination of linear carbonate and linear carboxylate; a combination of linear carbonate and ether; a combination of linear carboxylate and ether; a combination of cyclic carbonate, linear carbonate, and linear carboxylate; a combination of cyclic carbonate, linear carbonate, and ether; a combination of cyclic carbonate, linear carboxylate, and ether; and a combination of linear carbonate, linear carboxylate, and ether.

The cyclic carbonate, linear carbonate, linear carboxylate, ether, and the like included in the non-aqueous electrolyte of this application exist as non-aqueous solvents. The non-aqueous solvents of these specified combinations can not only improve the solubility and dispersibility of the electrolytic sodium salts in the non-aqueous solvents, but also participate in the formation of some specified sodium ion solvation configurations, thereby effectively suppressing decomposition of the solvent in the electrolyte and the accompanying gas generation, and further improving the electrochemical performance of the sodium-ion battery (especially under high-temperature conditions).

In any embodiment, a non-aqueous solvent in the non-aqueous electrolyte includes at least one of propylene carbonate, ethyl methyl carbonate, ethyl acetate, diethyl carbonate, methyl propionate, ethyl propionate, diethylene glycol dimethyl ether, and fluoroethylene carbonate.

In any embodiment, the non-aqueous electrolyte includes one or more of an anhydride additive, a fluorine-containing organic additive, a nitrile additive, an organosilicon additive, an aldehyde additive, a sulfur-containing additive, a lithium salt additive, and a potassium salt additive; and optionally, a sum of mass percentages of these additives in the non-aqueous electrolyte is greater than or equal to 0.001%, optionally greater than or equal to 0.2% and less than or equal to 5%, and optionally less than or equal to 4%.

To further optimize the stability of the film formed on the electrode surface of the sodium-ion battery during charge and discharge and obtain a thin and dense electrode/electrolyte interface film mainly composed of inorganic components, the above additives are optionally added to the electrolyte. When the sum of the mass percentages of the additives in the non-aqueous electrolyte is greater than or equal to 0.001%, optionally greater than or equal to 0.2%, the stability of the film formed on the electrode surface is improved. When the upper limit of the sum of the mass percentages of the additives in the non-aqueous electrolyte is less than or equal to 5%, optionally less than or equal to 4%, the possibility of excessive film formation on the electrode surface is reduced.

A second aspect of this application provides a sodium-ion battery including a positive electrode plate, a negative electrode plate, and the non-aqueous electrolyte according to the first aspect of this application.

A third aspect of this application provides an electric apparatus including the non-aqueous electrolyte according to the first aspect of this application or the sodium-ion battery according to the second aspect of this application.

### BRIEF DESCRIPTION OF DRAWINGS

FIG. 1 is a schematic diagram of a secondary battery according to an embodiment of this application.
FIG. 2 is an exploded view of the secondary battery according to the embodiment of this application in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application in FIG. 4.
FIG. 6 is a schematic diagram of an electric apparatus using a secondary battery as a power source according to an embodiment of this application.

### Description of reference signs:

1. battery pack; 2. upper box body; 3. lower box body; 4. battery module; 5. secondary battery; 51. housing; 52. electrode assembly; and 53. top cover assembly.

### DESCRIPTION OF EMBODIMENTS

The following discloses in detail embodiments where a non-aqueous electrolyte and a sodium-ion battery are specifically disclosed with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-6. In this application, unless otherwise specified, a value range of "a-b" is a short representation of any combinations of real numbers between a and b, where both a and b are real numbers. For example, a value range of "0-5" means that all real numbers in the range of "0-5" are listed herein, and "0-5" is just a short representation of a combination of these values. In addition, when a parameter is expressed as an integer greater than or equal to 2, it is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be mutually combined to form a new technical solution.

Unless otherwise specified, all the steps in this application can be performed in the order described or in random order, and optionally, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

A sodium-ion battery mainly consists of positive and negative electrode materials capable of implementing intercalation/deintercalation of sodium ions and an electrolyte containing a sodium salt and a non-aqueous solvent. The electrolyte plays an important role in the development process of the sodium-ion battery. As a bridge for transport of sodium ions between positive and negative electrodes, the electrolyte determines the capacity performance of the positive and negative electrode materials, thereby affecting the electrochemical performance of the sodium-ion battery. However, the electrolyte is also affected by factors such as the positive and negative electrode materials, environment (for example, temperature), and test conditions (for example, voltage).

Typically, the electrolyte of the sodium-ion battery is significantly affected by the negative electrode material. The negative electrode material of the sodium-ion battery includes metallic sodium, carbon materials (for example, hard carbon and graphite), and metal compounds (for example, metal oxides and alloys). These materials typically have low sodium intercalation potentials, which may lead to reductive decomposition of the electrolyte. Especially at high temperatures, the reductive decomposition of the solvent in the electrolyte on the surface of the negative electrode is more severe. Continuous decomposition of the solvent leads to severe gas generation in the sodium-ion battery, and accumulation of a large amount of gases (for example, carbon dioxide, carbon monoxide, hydrogen, and propylene) in the sodium-ion battery increases the safety risks of the sodium-ion battery during use. In addition, the continuous decomposition of the solvent typically forms a large number of organic decomposition products, and these organic matters are deposited on the surface of the negative electrode to form a thick and uneven organic solid electrolyte interface (SEI) film, significantly slowing down the transport kinetics of sodium ions at a negative electrode/electrolyte interface, and ultimately deteriorating the electrochemical performance (for example, cycling performance and rate performance) of the sodium-ion battery (especially at high temperatures). Moreover, the continuous deposition of the organic SEI film also causes an electrode to swell, and the swelling of the electrode and the large amount of gas generated lead to the volume swelling of the sodium-ion battery. This poses certain safety hazards to the sodium-ion battery during use.

The electrolyte of the sodium-ion battery is also affected by factors such as the operating voltage and chemical composition of the positive electrode material. Currently, the positive electrode material of the sodium-ion battery mainly includes transition metal oxides, polyanionic compounds, Prussian blue analogs, and the like. These positive electrode materials typically undergo intercalation/deintercalation reactions of sodium ions in high-voltage ranges. In a high-voltage state, the electrolyte undergoes oxidative decomposition at the positive electrode along with precipitation of a large amount of gas. Moreover, transition metals (for example, iron, cobalt, and nickel) in some metal oxide positive electrode materials have strong catalytic properties and may catalyze decomposition of the solvent and an electrolyte/positive electrode interface film. This causes continuous consumption of the electrolyte for film formation during the use of the sodium-ion battery, thereby depleting a large amount of reversible active sodium and solvent, and ultimately leading to the significantly reduced service life of the sodium-ion battery. Under high-temperature conditions, a decomposition speed of the electrolyte typically accelerates significantly, leading to more severe gas generation. Moreover, continuous decomposition of the solvent produces a large number of organic decomposition products, and these organic decomposition products are deposited on the surface of the positive electrode to form a thick and uneven electrolyte/positive electrode interface film, significantly increasing the transport resistance of sodium ions at the electrolyte/positive electrode interface, and ultimately affecting the electrochemical performance of the sodium-ion battery.

During actual use of the sodium-ion battery, the battery continuously generates heat and increases the temperature as the electrochemical reactions proceed. Under high-temperature conditions, the gas generation caused by decomposition of the electrolyte becomes more severe, thus affecting the industrial development of the sodium-ion battery. Therefore, it is of significant research importance to meet the usage requirements of the sodium-ion battery under high-temperature conditions through rational electrolyte design, and to improve the safety and electrochemical performance of the sodium-ion battery.

It has been found through research that the gas generation in the sodium-ion battery mainly originates from the continuous decomposition of the solvent at the electrode/electrolyte interface, which is closely related to the chemical environment of the solvent in the electrolyte. Typically, in the electrolyte of the sodium-ion battery, due to the difference in electrostatic potential between sodium ions and solvent molecules, the sodium ions attract the solvent molecules to be distributed around the sodium ions through electrostatic interactions, so as to form a solvated sodium ion shell structure. However, due to the strong electron attraction capability of the sodium ions, electrons in some solvent molecules transfer to the sodium ions, weakening chemical bonds in the solvent molecules in the shell structure, and leading to reduced chemical stability of these solvent molecules. In addition, compared with pure solvent molecules, the energy of the lowest unoccupied molecular orbital (LUMO) of the solvated sodium ions is further reduced, making it easier for the solvent molecules in the solvated sodium ion shell structure to gain electrons on the surface of the negative electrode and undergo reductive decomposition reactions, thus causing the electrolyte to be more prone to reductive decomposition than pure solvents. Therefore, regulating the chemical environment of the solvent molecules in the electrolyte of the sodium-ion battery is the key to suppressing decomposition and gas generation of the solvent.

It has been found, according to existing reports and systematic research, that the composition of metal salts (especially anions in metal salts) plays a crucial role in the chemical and electrochemical stability of batteries. In a same solvent, types of metal salts determine the solvation structure and thermodynamic stability of the electrolyte, thereby affecting the decomposition behavior of the electrolyte and further regulating the electrode/electrolyte interface properties and the electrochemical performance of the electrode. Introducing electron-rich anions into an electrolyte system of the sodium-ion battery can significantly suppress decomposition and gas generation of the solvent. The electron-rich anions participate in the solvation structure of the sodium ions, which can provide some electrons to the sodium ions, weakening the strong electron attraction capability of the sodium ions on the solvent molecules, and alleviating the weakening of chemical bonds and the instability of molecular structures caused by local electron deficiency of the solvent molecules. Moreover, it has been found through research that the selection of anion types and radii can further regulate the solvation structure of the sodium ions and the chemical environment of the solvent molecules in the electrolyte. More importantly, some different types of anions also have synergistic effects in the electrolyte. These anions act as electron "sponges" providing electrons to the solvated sodium ion shell, synergistically improving the chemical stability, electrochemical stability, and thermal stability of the electrolyte. In addition, it has been found through research that some of electrons in some fluorine-containing anions transfer to the sodium ions, weakening local chemical bonds in their ionic structures, and implementing preferential decomposition to form a thin and dense electrode/electrolyte interface film rich in inorganic components in an electrochemical reaction process of the sodium-ion battery, thereby significantly suppressing continuous decomposition and gas generation of the solvent in the electrolyte. This can effectively improve the electrochemical performance of the sodium-ion battery (especially at high temperatures).

Therefore, this application is intended to provide a sodium-ion battery electrolyte containing electron-rich anions and a sodium-ion battery by regulating the solvation structure of sodium ions and the chemical environment of solvent molecules in the electrolyte, so as to solve the gas generation problem caused by continuous decomposition of a solvent in the sodium-ion battery.

Based on the above content, a first aspect of this application provides a non-aqueous electrolyte. The non-aqueous electrolyte includes:
a first sodium salt, where the first sodium salt includes at least one of sodium hexafluorophosphate (NaPF₆), sodium hexafluoroarsenate (NaAsF₆), sodium perchlorate (NaClO₄), and sodium trifluoroacetate (CF₃COONa), and optionally, the first sodium salt is sodium hexafluorophosphate; and
a second sodium salt, where the second sodium salt includes one, two, or more of a sodium salt having sulfonate, a sodium salt having oxalate, a sodium salt having phosphate, and a sodium salt having borate, and optionally, the second sodium salt includes a sodium salt having sulfonate, a sodium salt having oxalate, a sodium salt having phosphate, and a sodium salt having borate.

In this application, the sulfonate in the sodium salt having sulfonate includes but is not limited to, for example, SO₃² , (SO₃CF₃) , and [N(FSO₂)₂]⁻. The oxalate in the sodium salt having oxalate includes but is not limited to, for example, C₂O₄²⁻, (C₂O₄BF₂)⁻, and [(C₂O₄)₂B]⁻. The borate in the sodium salt having borate includes but is not limited to, for example, BF₄⁻ and BO₂⁻. The phosphate in the sodium salt having phosphate includes but is not limited to, for example, PO₄³⁻, (PO₃F)²⁻, and (PO₂F₂)⁻.

The non-aqueous electrolyte is obtained by dissolving electrolytic sodium salts containing electron-rich anions in a non-aqueous solvent. As described above, the first sodium salt and the second sodium salt are selectively added, so that the solvation structure of sodium ions and the chemical environment of solvent molecules in the electrolyte can be regulated, thereby solving the gas generation problem caused by continuous decomposition of the solvent in a sodium-ion battery.

In some embodiments, in the non-aqueous electrolyte, a molar concentration ratio of the first sodium salt to the second sodium salt is greater than or equal to 1/1, optionally greater than or equal to 2/1, more optionally greater than or equal to 5/1, further optionally greater than or equal to 10/1 and less than or equal to 1000/1, optionally less than or equal to 40/1, and more optionally less than or equal to 20/1.

In some embodiments, in the non-aqueous electrolyte, a molar concentration ratio of the first sodium salt to the second sodium salt is greater than or equal to 1/1, optionally greater than or equal to 3/1 and less than or equal to 40/1, and more optionally less than or equal to 15/1.

In the entire electrolyte, the molar concentration ratio of the first sodium salt to the second sodium salt is within the above range, which can reduce the risk of excessive film formation on an electrode surface and alleviate the transport resistance of sodium ions at an electrode/electrolyte interface, thereby causing a small effect on the kinetic process of the sodium-ion battery.

In some embodiments, the sodium salt having sulfonate includes at least one of sodium fluorosulfonate (FSO₃Na), sodium trifluoromethanesulfonate (NaSO₃CF₃), sodium bis(fluorosulfonyl)imide (Na[(FSO₂)₂N]), sodium bis(trifluoromethanesulfonyl)imide (Na[(CF₃SO₂)₂N]), sodium methanesulfonate (CH₃SO₃Na), sodium vinylsulfonate (C₂H₃NaO₃S), sodium methanesulfate (CH₃OSO₃Na), sodium methanethiosulfonate (CH₃NaO₂S₂), sodium 1,2-ethanediyl disulfonate (NaO₃SCH₂CH₂SO₃Na), sodium ethylsulfate (C₂H₅NaO₄S), sodium propanesulfonate (C₃H₇NaO₃S), sodium ethylthiosulfonate (C₂H₅NaO₂S₂), sodium 2-iodobenzenesulfonate (C₆H₄INaO₃S), sodium 4-nitrobenzenesulfonate (C₇H₆NNaO₅S), sodium styrenesulfonate (C₈H₇NaO₃S), sodium 4-isopropylbenzenesulfonate (C₉H₁₁NaO₃S), sodium phenolsulfonate (C₆H₅NaO₄S), sodium β-styrenesulfonate (C₈H₇NaO₃S), sodium cyclohexanesulfonate (C₆H₁₁NaO₃S), sodium 2-cyclohexylaminoethanesulfonate (C₈H₁₆NNaO₃S), sodium 4-amino-N-methylbenzenesulfonamide (C₇H₁₀N₂O₂S), sodium poly(dithiodipropanesulfonate) (C₆H₁₂Na₂O₆S₄), sodium pyridin-3-sulfonate (C₅H₄NNaO₂S), and sodium piperazine-1,4-diethanesulfonate (C₈H₁₇N₂NaO₆S₂); and optionally, the sodium salt having sulfonate includes at least one of sodium fluorosulfonate, sodium trifluoromethanesulfonate, sodium bis(fluorosulfonyl)imide, sodium bis(trifluoromethanesulfonyl)imide, sodium methanesulfonate, and sodium methanesulfate.

In some embodiments, a concentration of the sodium salt having sulfonate in the non-aqueous electrolyte is within a range of 0.0005-1 mol/L, optionally within a range of 0.01-0.3 mol/L.

In some optional embodiments, the concentration of the sodium salt having sulfonate in the non-aqueous electrolyte is greater than or equal to 0.001 mol/L, optionally greater than or equal to 0.01 mol/L and less than or equal to 0.3 mol/L, and optionally less than or equal to 0.15 mol/L.

In the second sodium salt, the concentration of the sodium salt having sulfonate in the electrolyte is greater than or equal to 0.0005 mol/L, which can improve the stability of the first sodium salt in the electrolyte and allow the sodium-ion battery to form a stable solid electrolyte interface film on the electrode surface in an electrochemical reaction process, thereby effectively suppressing decomposition and gas generation of the solvent in the electrolyte on the electrode surface, and improving the electrochemical performance of the sodium-ion battery (especially at high temperatures). Optionally, the concentration of the sodium salt having sulfonate in the electrolyte may be greater than or equal to 0.01 mol/L. In addition, the concentration of the sodium salt having sulfonate in the electrolyte being less than or equal to 1 mol/L can more effectively reduce the risk of excessive film formation on an electrode, thus not significantly affecting the electrochemical performance of the sodium-ion battery at high temperatures. Optionally, the concentration may be less than or equal to 0.15 mol/L.

In some embodiments, the sodium salt having oxalate includes at least one of sodium oxalate (Na₂C₂O₄), sodium bis(oxalate)borate (C₄BNaO₈), sodium difluoro(oxalate)borate (C₂BF₂NaO₄), sodium tetrafluoro(oxalate)phosphate (C₂F₄NaO₄P), and sodium difluoro bis(oxalate)phosphate (C₄F₂NaO₈P).

Sodium bis(oxalate)borate and sodium difluoro(oxalate)borate have both oxalate and borate, and can be categorized as either a sodium salt having oxalate or a sodium salt having borate. Sodium bis(oxalate)borate and sodium difluoro(oxalate)borate are categorized as a sodium salt having oxalate here. Similarly, sodium tetrafluoro(oxalate)phosphate and sodium difluoro bis(oxalate)phosphate can also be categorized as a sodium salt having phosphate and are categorized as a sodium salt having oxalate in this specification.

In some optional embodiments, a concentration of the sodium salt having oxalate in the non-aqueous electrolyte is greater than or equal to 0.001 mol/L, optionally greater than or equal to 0.006 mol/L, and further optionally greater than or equal to 0.01 mol/L and less than or equal to 0.08 mol/L.

In some embodiments, the concentration of the sodium salt having oxalate in the non-aqueous electrolyte is within a range of 0.0005-0.1 mol/L, optionally within a range of 0.006-0.08 mol/L, and further optionally within a range of 0.01-0.02 mol/L.

In the second sodium salt, the concentration of the sodium salt having oxalate in the electrolyte is greater than or equal to 0.0005 mol/L, which can significantly improve the stability of the first sodium salt in the electrolyte and facilitate the improvement of the high-temperature cycling performance and capacity retention rate after storage of the sodium-ion battery. Optionally, the concentration may be greater than or equal to 0.006 mol/L, further optionally greater than or equal to 0.01 mol/L. In addition, the concentration is preferably less than or equal to 0.08 mol/L, which can more effectively reduce the possibility of excessive film formation of the sodium salt having oxalate on the electrode, thus not significantly affecting the kinetic process of the sodium-ion battery during charge and discharge.

In some embodiments, the sodium salt having phosphate includes at least one of sodium difluorophosphate (NaPO₂F₂), sodium monofluorophosphate (Na₂PO₃F), sodium trimetaphosphate (Na₃P₃O₉), sodium hexametaphosphate (Na₆P₆O₁₈), sodium hydroxyethane diphosphonate (C₂H₇NaO₇P₂), clodronate disodium (CH₂Cl₂Na₂O₆P₂), olpadronate sodium (C₅H₁₅NO₇P₂), sodium diethylenetriamine penta(methylenephosphonate) (C₉H₁₈N₃Na₁₀O₁₅P₅), sodium tripolyphosphate (Na₅P₃O₁₀), and disodium phenyl phosphate (C₆H₅Na₂O₄P); and optionally, the sodium salt having phosphate includes at least one of sodium difluorophosphate (NaPO₂F₂) and sodium fluorophosphate (Na₂PO₃F).

In some optional embodiments, a concentration of the sodium salt having phosphate in the non-aqueous electrolyte is greater than or equal to 0.001 mol/L, optionally greater than or equal to 0.01 mol/L and less than or equal to 0.12 mol/L.

In some embodiments, the concentration of the sodium salt having phosphate in the non-aqueous electrolyte is within a range of 0.0005-0.12 mol/L, optionally within a range of 0.01-0.05 mol/L, and more optionally within a range of 0.01-0.03 mol/L.

In the second sodium salt, a molar concentration of the sodium salt having phosphate in the non-aqueous electrolyte is greater than or equal to 0.0005 mol/L, which can improve the stability of the first sodium salt in the electrolyte and allow the sodium-ion battery to form a thin and firm solid electrolyte film mainly composed of inorganic components on the electrode surface in a formation process. This can significantly suppress gas generation in the sodium-ion battery. Optionally, the concentration is greater than or equal to 0.01 mol/L. In addition, the concentration being less than or equal to 0.12 mol/L can effectively reduce the possibility of excessive film formation of the sodium salt having phosphate on the electrode surface, thus not significantly affecting the kinetic process of the sodium-ion battery during charge and discharge.

In some embodiments, the sodium salt having borate includes at least one of sodium tetrafluoroborate (NaBF₄), sodium metaborate (BNaO₂), sodium tetraphenylborate ((C₆H₅)₄BNa), and sodium tetrakis[3,5-bis(trifluoromethyl)phenyl]borate (C₃₂H₁₂BF₂₄Na); optionally, the sodium salt having borate includes at least one of sodium tetrafluoroborate, sodium metaborate, and sodium tetraphenylborate; and further optionally, the sodium salt having borate includes at least one of sodium tetrafluoroborate and sodium metaborate.

In some optional embodiments, a concentration of the sodium salt having borate in the non-aqueous electrolyte is greater than or equal to 0.001 mol/L, optionally greater than or equal to 0.008 mol/L and less than or equal to 0.03 mol/L.

In some embodiments, the concentration of the sodium salt having borate in the non-aqueous electrolyte is within a range of 0.0005-0.05 mol/L, optionally within a range of 0.01-0.04 mol/L.

In the second sodium salt, a molar concentration of the sodium salt having borate in the non-aqueous electrolyte is greater than or equal to 0.0005 mol/L, which can improve the stability of the first sodium salt in the electrolyte to some extent and allow the sodium-ion battery to form a thin and dense solid electrolyte interface film on the electrode surface in the electrochemical reaction process, thereby suppressing continuous decomposition of the solvent in the electrolyte at the electrode/electrolyte interface. Thus, this significantly suppresses gas generation in the sodium-ion battery and also improves the cycling performance (especially at high temperatures) and capacity retention rate after high-temperature storage of the sodium-ion battery. In addition, the concentration being less than or equal to 0.05 mol/L can effectively reduce the possibility of excessive film formation of the sodium salt having borate on the electrode surface, thus not significantly affecting the kinetic process of the sodium-ion battery during charge and discharge. Further optionally, the concentration of the sodium salt having borate in the non-aqueous electrolyte is within a range of 0.01-0.02 mol/L.

In some embodiments, in the first sodium salt, when sodium hexafluorophosphate is used in combination with at least one of sodium hexafluoroarsenate, sodium perchlorate, and sodium trifluoroacetate, a concentration of other sodium salts than sodium hexafluorophosphate in the non-aqueous electrolyte is greater than or equal to 0.001 mol/L, optionally greater than or equal to 0.01 mol/L, further optionally greater than or equal to 0.03 mol/L and less than or equal to 1 mol/L, and optionally less than or equal to 0.5 mol/L.

Optionally, in the first sodium salt, the concentration of other sodium salts than sodium hexafluorophosphate (NaPF₆) in the non-aqueous solvent is preferably greater than or equal to 0.005 mol/L, more preferably greater than or equal to 0.01 mol/L, further preferably greater than or equal to 0.02 mol/L, with an upper limit of the concentration being preferably less than or equal to 0.7 mol/L and further preferably less than or equal to 0.6 mol/L.

The concentration of sodium hexafluorophosphate in the non-aqueous electrolyte of this application may be any concentration or a conventional concentration; and optionally, the concentration of sodium hexafluorophosphate in the non-aqueous electrolyte of this application is 0.4-1.6 mol/L.

In the first sodium salt, if the concentration of other sodium salts than sodium hexafluorophosphate (NaPF₆) in the non-aqueous solvent is greater than or equal to 0.001 mol/L, the electrochemical performance of the sodium-ion battery at high temperatures can be improved. If the concentration of other sodium salts in the non-aqueous solvent is less than or equal to 1 mol/L, the solvation structure of sodium ions and the chemical environment of non-aqueous solvent molecules in the electrolyte can be regulated to some extent, suppressing decomposition and gas generation of the electrolyte under high-temperature conditions, and facilitating the improvement of the electrochemical performance of the sodium-ion battery at high temperatures.

In some embodiments, the second sodium salt includes a sodium salt having sulfonate and further includes at least one of a sodium salt having oxalate, a sodium salt having phosphate, and a sodium salt having borate.

In the second sodium salt, the combined use of the sodium salt having sulfonate with at least one of the sodium salt having oxalate, the sodium salt having phosphate, and the sodium salt having borate can generate a synergistic effect to jointly participate in the solvation process of sodium ions in the electrolyte and provide some electrons to the sodium ions. This can effectively suppress the strong electron attraction capability of the sodium ions on the non-aqueous solvent molecules and significantly suppress the continuous decomposition and gas generation of the electrolyte. In addition, the combined use of the sodium salt having sulfonate with at least one of the sodium salt having oxalate, the sodium salt having phosphate, and the sodium salt having borate can form a thin and dense solid electrolyte interface film rich in inorganic components at the electrode/electrolyte interface, significantly improving the electrochemical performance of the sodium-ion battery (especially at high temperatures).

In some embodiments, the second sodium salt includes a sodium salt having sulfonate and a sodium salt having oxalate; and optionally, a molar ratio of the sodium salt having sulfonate to the sodium salt having oxalate is 0.03/1 to 70/1, optionally 0.5/1 to 20/1. Further optionally, the molar ratio of the sodium salt having sulfonate to the sodium salt having oxalate is 1/1 to 10/1.

The combined use of the sodium salt having oxalate with the sodium salt having phosphate and the sodium salt having borate improves the effect of suppressing decomposition and gas generation of the electrolyte. The molar ratio of the sodium salt having sulfonate to the sodium salt having oxalate being 1/1 to 10/1 leads to a high possibility of forming a thin solid electrolyte interface film mainly composed of inorganic components on the electrode surface of the sodium-ion battery during charge and discharge.

A non-aqueous solvent in the non-aqueous electrolyte may include cyclic carbonate, linear ester, and/or ether; and optionally, the non-aqueous solvent includes at least one of cyclic carbonate, linear carbonate, linear carboxylate, and ether.

In some embodiments, the non-aqueous electrolyte includes cyclic carbonate, where a mass concentration percentage of the cyclic carbonate in the non-aqueous electrolyte is greater than or equal to 10%, optionally greater than or equal to 15% and less than or equal to 60%.

The cyclic carbonate that is commonly used as a solvent in a battery includes but is not limited to, for example, one or more of ethylene carbonate (EC), propylene carbonate (PC), butylene carbonate (BC), vinylene carbonate (VC), fluoroethylene carbonate (FEC), ethylene sulfite (ES), propylene sulfite (PS), vinyl ethylene carbonate (VEC), 4-ethynyl-1,3-dioxolane-2-one (EEC), cis-4,5-difluoro-1,3-dioxolane-2-one, and trans-4,5-difluoro-1,3-dioxolane-2-one; and more optionally, the cyclic carbonate includes one or more of ethylene carbonate (EC), propylene carbonate (PC), butylene carbonate (BC), and vinylene carbonate (VC).

The mass concentration percentage of the cyclic carbonate in the non-aqueous electrolyte being within the above range can improve the stability of the electrode/electrolyte interface film of the sodium-ion battery under high-temperature conditions to some extent, without substantially affecting the migration speed of the sodium ions.

In the cyclic carbonate, ethylene carbonate (EC), propylene carbonate (PC), butylene carbonate (BC), and vinylene carbonate (VC) are used, which improves the kinetic process of sodium-ion batteries at high temperatures to some extent.

In some embodiments, the non-aqueous electrolyte includes linear carbonate and linear carboxylate, where a sum of mass percentages of the linear carbonate and the linear carboxylate in the non-aqueous electrolyte is greater than or equal to 40%, optionally greater than or equal to 50%, more optionally greater than or equal to 60% and less than or equal to 90%, optionally less than or equal to 85%, and further optionally less than or equal to 80%.

The linear carbonate that can be used as a solvent in a battery optionally includes at least one of the following substances: dimethyl carbonate (DMC), diethyl carbonate (DEC), ethyl methyl carbonate (EMC), methyl propyl carbonate (MPC), methyl isopropyl carbonate (MIPC), methyl butyl carbonate, ethyl propyl carbonate, dipropyl carbonate, and dibutyl carbonate; and optionally, the linear carbonate includes one or more of dimethyl carbonate (DMC), diethyl carbonate (DEC), ethyl methyl carbonate (EMC), and methyl propyl carbonate (MPC).

The linear carboxylate that can be used as a solvent in a battery optionally includes at least one of the following substances: methyl formate (MF), ethyl formate (EF), methyl propionate (MP), ethyl propionate (EP), propyl propionate (PP), ethyl butyrate (EB), methyl acetate (MA), ethyl acetate (EA), and propyl acetate (PA); and optionally, the linear carboxylate includes at least one of methyl propionate (MP), ethyl propionate (EP), propyl propionate (PP), methyl acetate (MA), ethyl acetate (EA), and propyl acetate (PA).

When the sum of the mass percentages of the linear carbonate and linear carboxylate in the electrolyte is greater than or equal to 40%, optionally greater than or equal to 50%, more optionally greater than or equal to 60%, the viscosity of the electrolyte is not excessively high. When the upper limit of the sum of the mass percentages of the linear carbonate and linear carboxylate in the electrolyte is less than or equal to 90%, optionally less than or equal to 85%, and further optionally less than or equal to 80%, the decrease in ionic conductivity is not significant, and the electrochemical performance of the sodium-ion battery is less affected.

In some embodiments, the non-aqueous electrolyte includes at least one cyclic carbonate and at least one linear ester, where a mass percentage ratio of the at least one cyclic carbonate to the at least one linear ester is greater than or equal to 0.1:1 and less than or equal to 1.5:1, optionally less than or equal to 1:1, and more optionally 0.2:1 to 1:1.

The cyclic carbonate is as described above. The linear ester includes the linear carbonate and linear carboxylate as described above.

Optionally, the total number of types of the cyclic carbonate and linear ester in the non-aqueous electrolyte of this application is two or more.

The mass percentage ratio of the cyclic carbonate to the linear ester in the non-aqueous electrolyte of this application being within the above range can suppress decomposition and gas generation of the electrolyte in the sodium-ion battery at high temperatures to some extent and facilitate the improvement of the electrochemical performance of the sodium-ion battery to some extent.

In some embodiments, the non-aqueous electrolyte includes at least one of the following substance combinations: a combination of cyclic carbonate and linear carbonate; a combination of cyclic carbonate and linear carboxylate; a combination of cyclic carbonate and ether; a combination of linear carbonate and linear carboxylate; a combination of linear carbonate and ether; a combination of linear carboxylate and ether; a combination of cyclic carbonate, linear carbonate, and linear carboxylate; a combination of cyclic carbonate, linear carbonate, and ether; a combination of cyclic carbonate, linear carboxylate, and ether; and a combination of linear carbonate, linear carboxylate, and ether.

The cyclic carbonate, linear carbonate, and linear carboxylate are as described above. The ether that can be used as a solvent in a battery optionally includes at least one of the following substances: dioxolane (DOL), tetrahydrofuran (THF), 2-methyltetrahydrofuran (2Me-THF), tetrahydropyran (THP), 1,2-dimethoxyethane (DME), diethylene glycol dimethyl ether (DG), 1,2-diethoxyethane, and 1,2-dibutoxyethane.

The cyclic carbonate, linear carbonate, linear carboxylate, ether, and the like included in the non-aqueous electrolyte of this application exist as non-aqueous solvents. The non-aqueous solvents of these specified combinations can not only improve the solubility and dispersibility of the electrolytic sodium salts in the non-aqueous solvents, but also participate in the formation of some specified sodium ion solvation configurations, thereby effectively suppressing decomposition of the solvent in the electrolyte and the accompanying gas generation, and further improving the electrochemical performance of the sodium-ion battery (especially under high-temperature conditions).

In some embodiments, a non-aqueous solvent in the non-aqueous electrolyte includes at least one of propylene carbonate, ethyl methyl carbonate, ethyl acetate, diethyl carbonate, methyl propionate, ethyl propionate, diethylene glycol dimethyl ether, and fluoroethylene carbonate.

In some embodiments, the non-aqueous electrolyte includes one or more of an anhydride additive, a fluorine-containing organic additive, a nitrile additive, an organosilicon additive, an aldehyde additive, a sulfur-containing additive, a lithium salt additive, and a potassium salt additive; and optionally, a sum of mass percentages of these additives in the non-aqueous electrolyte is greater than or equal to 0.001%, optionally greater than or equal to 0.2% and less than or equal to 5%, and optionally less than or equal to 4%.

To further optimize the stability of the film formed on the electrode surface of the sodium-ion battery during charge and discharge and obtain a thin and dense electrode/electrolyte interface film mainly composed of inorganic components, some additives are optionally added to the electrolyte. For example, some additives may be added, which are specifically described below.

The anhydride additive that can be used in the electrolyte may include but is not limited to, for example, one or more of succinic anhydride, maleic anhydride, caproic anhydride, maleic anhydride, butanedioic anhydride, butyric anhydride, crotonic anhydride, phthalic anhydride, pyromellitic dianhydride, allyl succinic anhydride, or 3-allyl succinic anhydride.

The fluorine-containing organic additive may include but is not limited to, for example, one or more of fluoroethylene carbonate (FEC), difluoroethylene carbonate (DFEC), tris(2,2,2-trifluoroethyl) borate, tris(hexafluoroisopropyl) phosphate, and tris(2,2,2-trifluoroethyl) phosphite.

The nitrile additive that can be used in the electrolyte may include but is not limited to, for example, at least one of succinonitrile, malononitrile, isophthalonitrile, glutaronitrile, methoxy pentafluorocyclotriphosphazene, acrylonitrile, cyclobutyronitrile, dimethylaminopropionitrile, ethoxy pentafluorocyclotriphosphazene, dicyandiamide, phenoxy pentafluorocyclotriphosphazene, ethyl cyanoacrylate, p-chlorobenzyl cyanide, 2-chloro-5-nitrobenzonitrile, p-toluenesulfonylmethyl isocyanide, adiponitrile, and pimelonitrile.

The organosilicon additive that can be used in the electrolyte may include but is not limited to, for example, one or more of silane, trimethylsilanol, trimethylchlorosilane, hexamethyldisiloxane, bis(diethylamino)silane, chloromethylsilane, octamethylcyclotetrasiloxane, N-methyl-N-trimethylsilyltrifluoroacetamide, diphenylsilanediol, phenyltrichlorosilane, chlorophenylsilane, tris(trimethylsilyl) phosphate, bromodifluoro(trimethylsilyl)methane, or dichloromethylsilane.

The aldehyde additive may include but is not limited to, for example, at least one of 2-imidazolecarboxaldehyde, 3-indolecarboxaldehyde, 2-pyrrolecarboxaldehyde, p-chlorobenzaldehyde, 6-chloronicotinaldehyde, 1-methylindole-3-carboxaldehyde, 2-thiazolecarboxaldehyde, 5-chloro-2-furaldehyde, or azole-2-carbaldehyde.

The sulfur-containing additive that can be used in the electrolyte may include but is not limited to, for example, one or more of thiourea, sultone, 1,5-naphthalenedisulfonic acid, dimethyl sulfone, sulfolane, methanesulfonic anhydride, dimethyl sulfoxide, 2-mercapto-5-methyl-1,3,4-thiadiazole, dithioxamide, tertbutyldimethylsilyl trifluoromethanesulfonate, sodium 2,7-dihydroxynaphthalene-3,6-disulfonate, ethylene sulfite, propylene sulfate, butylene sulfate, or vinyl sulfone.

The lithium salt additive that can be used in the electrolyte may include but is not limited to, for example, one or more of lithium hexafluorophosphate, lithium hexafluoroarsenate, lithium perchlorate, lithium tetrafluoroborate, lithium trifluoroacetate, lithium fluorosulfonate, lithium trifluoromethanesulfonate, lithium bis(fluorosulfonyl)imide, lithium bis(trifluoromethanesulfonyl)imide, lithium methanesulfonate, or lithium ethylsulfate.

The potassium salt additive that can be used in the electrolyte may include but is not limited to, for example, one or more of potassium hexafluorophosphate, potassium perchlorate, potassium tetrafluoroborate, potassium trifluoroacetate, potassium fluorosulfonate, potassium trifluoromethanesulfonate, potassium bis(fluorosulfonyl)imide, or potassium bis(trifluoromethanesulfonyl)imide.

When the sum of the mass percentages of the additives in the non-aqueous electrolyte is greater than or equal to 0.001%, optionally greater than or equal to 0.2%, the stability of the film formed on the electrode surface is improved. When the upper limit of the sum of the mass percentages of the additives in the non-aqueous electrolyte is less than or equal to 5%, optionally less than or equal to 4%, the possibility of excessive film formation on the electrode surface is reduced.

The component detection of the electrolyte in the sodium-ion battery of this application may refer to the sodium salt detection standard in the electrolyte: the ion chromatography analysis method in the general principles of modern analytical instrument analysis methods (JY/T 020-1996, published on January 23, 1997, implemented on April 1, 1997), where the ion chromatography analysis method is used to test and analyze the sodium salt and anions in the electrolyte.

A second aspect of this application provides a sodium-ion battery including a positive electrode plate, a negative electrode plate, and the non-aqueous electrolyte according to the first aspect of this application.

All the descriptions regarding the non-aqueous electrolyte are also applicable to the sodium-ion battery according to the second aspect of this application and an electric apparatus according to a third aspect of this application.

In the sodium-ion battery, the use of components such as the positive electrode plate, negative electrode plate, and separator other than the non-aqueous electrolyte described above is not particularly limited.

In this application, a positive electrode material used for the positive electrode plate of the sodium-ion battery is an electroactive material capable of implementing reversible intercalation/deintercalation of sodium ions, which may include but is not limited to any one of transition metal oxides, Prussian blue analogs, polyanionic compounds, and organic positive electrode materials, but this application is not limited to these materials.

In this application, a negative electrode material used for the negative electrode plate of the sodium-ion battery is an electroactive material capable of implementing reversible intercalation/deintercalation of sodium ions, which may be appropriately selected from any one of metallic sodium, hard carbon, graphite, metal oxides, metal sulfides, metal phosphides, and alloy negative electrodes, but this application is not limited to these materials.

In the sodium-ion battery of this application, the positive electrode plate and the negative electrode plate may further include a conductive agent and a binder, where types and amounts of the conductive agent and the binder are not specifically limited, which may be selected and optimized based on actual requirements.

In the sodium-ion battery of this application, the separator is typically disposed between the positive electrode plate and the negative electrode plate for separating the positive electrode plate from the negative electrode plate. Type and thickness of the separator are not specifically limited and may be any separator material used in existing batteries, for example, polyethylene, polypropylene, polyvinylidene fluoride, or multi-layer composite films thereof, but this application is not limited to these materials.

In some optional embodiments, the sodium-ion battery includes a positive electrode plate and a negative electrode plate, where a capacity ratio of the positive electrode plate to the negative electrode plate is 1:(1-1.3).

In the sodium-ion battery of this application, when the capacity ratio of the positive electrode plate to the negative electrode plate is within the above range, the possibility of excessive film formation of the electrolyte on the electrode surface is reduced, and the continuous decomposition of the electrolyte and the accompanying gas generation speed can be appropriately slowed down, thus facilitating the improvement of the electrochemical performance of the sodium-ion battery (especially at high temperatures).

For example, a test method for the capacity ratio of the positive electrode plate to the negative electrode plate is described below.

Positive electrode plate capacity test: The positive electrode plate is punched into small discs with a diameter of 14 mm, and a metallic sodium plate is used as a negative electrode and a polypropylene film is used as a separator to assemble a button cell. Constant-current charge and discharge tests are performed at a rate of 0.1C in a voltage range of 1.5-4.2 V to obtain the positive electrode charge specific capacity Q1.

Negative electrode plate capacity test: The negative electrode plate is punched into small discs with a diameter of 14 mm, and a metallic sodium plate is used as a negative electrode and a polypropylene film is used as a separator to assemble a button cell. Constant-current charge and discharge tests are performed in a voltage range of 0.005-2 V. In a discharge process, the button cell is sequentially constant-current discharged to 0.005 V at rates of 0.05C, 40 µA, and 10 µA. In a charge process, the button cell is constant-current charged to 2 V at a rate of 0.05C, and a charge specific capacity is denoted as Q2.

Capacity ratio of positive electrode to negative electrode=Q1/Q2.

In some embodiments, the positive electrode plate, the negative electrode plate, and the separator may be made into an electrode assembly through winding or lamination.

In some embodiments, a secondary battery may include an outer package. The outer package may be used for packaging the electrode assembly and an electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. The material of the soft pack may be plastic. As the plastic, polypropylene, polybutylene terephthalate, polybutylene succinate, and the like may be listed.

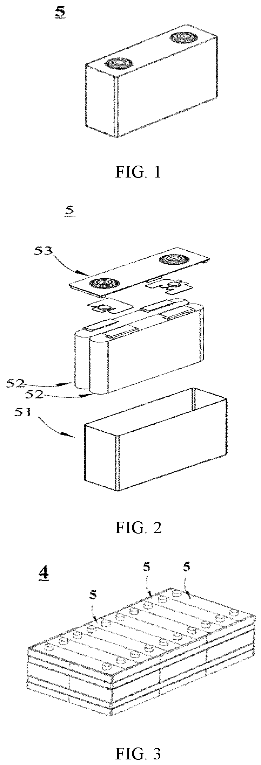

This application has no specific limitation on a shape of the secondary battery, and the secondary battery may be cylindrical, rectangular, or of any other shapes. For example, FIG. 1 shows a secondary battery of a rectangular structure as an example.

In some embodiments, referring to FIG. 2, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. A positive electrode plate, a negative electrode plate, and a separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices based on specific actual requirements.

The secondary battery includes a battery cell form, a battery module form, and a battery pack form. In some embodiments, a battery cell may be assembled into a battery module, and the battery module may include one or more battery cells. The specific quantity may be chosen by persons skilled in the art according to the use and capacity of the battery module.

FIG. 3 shows a battery module 4 as an example. Referring to FIG. 3, in the battery module 4, a plurality of battery cells 5 may be sequentially arranged along a length direction of the battery module 4. Certainly, the battery cells may alternatively be arranged in any other manners. Further, the plurality of battery cells 5 may be fastened by fasteners.

Optionally, the battery module 4 may further include an enclosure with an accommodating space, and the plurality of battery cells 5 are accommodated in the accommodating space.

In some embodiments, the battery cells may be assembled into a battery pack. In some embodiments, the battery module may be further assembled into a battery pack, and the battery pack may include one or more battery modules. The specific quantity may be chosen by persons skilled in the art based on use and capacity of the battery pack.

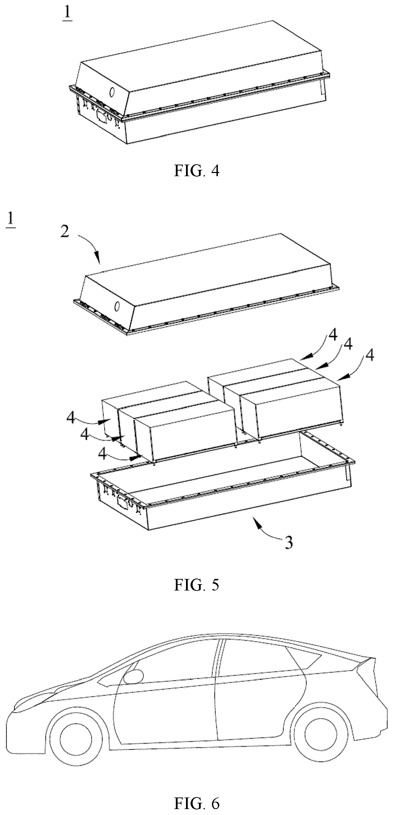

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can be engaged with the lower box body 3 to form an enclosed space for accommodating the battery modules 4. The plurality of battery modules 4 may be arranged in the battery box in any manner.

In addition, this application further provides an electric apparatus, where the apparatus includes the secondary battery according to the second aspect of this application. The secondary battery may be used as a power source of the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like, but is not limited thereto.

As the electric apparatus, the secondary battery may be selected according to requirements for using the electric apparatus.

FIG. 6 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. Such apparatus is generally required to be light and thin and may use a secondary battery as its power source.

### Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

The following further describes this application with reference to the examples, and these examples are merely intended to illustrate this application but not to limit the scope of this application.

The secondary batteries in the examples and comparative examples are prepared according to the following method:

### (1) Preparation of electrolyte

Example 1: In an argon atmosphere glove box (H₂O<0.1 ppm, O₂<0.1 ppm), the non-aqueous organic solvents (see Table 1 below) were mixed well at a mass ratio in Table 1. The resulting mixture was slowly added with the following sodium salts: the first sodium salt, the second sodium salt, and the additive in Table 1. Then, the resulting mixture was stirred well to obtain the corresponding electrolyte.

Similar to Example 1, in other examples and comparative examples, the respective non-aqueous solvents, first sodium salts, second sodium salts, and additives in Table 1 were used for preparing the corresponding non-aqueous electrolytes.

### (2) Preparation of positive electrode plate

A positive electrode active material NaCu_{1/9}Ni_{2/9}Fe_{1/3}Mn_{1/3}O₂, a conductive agent acetylene black, and a binder polyvinylidene fluoride were dissolved in a solvent N-methylpyrrolidone at a mass ratio of 94:3:3. The resulting solution was stirred and mixed well to obtain a positive electrode slurry. Then, the positive electrode slurry was evenly applied onto a positive electrode current collector, followed by drying, cold pressing, and cutting to obtain a positive electrode plate.

### (3) Preparation of negative electrode plate

An active substance hard carbon, a conductive agent acetylene black, a binder styrene-butadiene rubber, and a thickener sodium carboxymethyl cellulose were dissolved in a solvent deionized water at a weight ratio of 95:2:2:1 and were mixed well with the solvent deionized water to obtain a negative electrode slurry. Then, the negative electrode slurry was evenly applied onto a negative electrode current collector copper foil, followed by drying, cold pressing, and cutting to obtain a negative electrode plate.

### (4) Preparation of separator

A polypropylene film was used as a separator.

### (5) Preparation of sodium-ion battery (battery cell)

The positive electrode plate, the separator, and the negative electrode plate were sequentially stacked, so that the separator was located between the positive electrode plate and the negative electrode plate for separation. Then, the resulting stack was wound and packaged to obtain a soft pack battery. After vacuum drying was performed, the electrolyte was injected. Then, the processes such as formation and standing were performed to obtain a sodium-ion soft pack battery with a capacity of 2 Ah.

**Table 1: Electrolyte compositions of examples and comparative examples (all molar concentrations in table were measured in mol/L, that is, M)**

| No. | Solvent composition (Mass ratio) | First sodium salt NaPF₆ (Molar concentration) | Second sodium salt | | | | Other additives (Molar concentration) |
|---|---|---|---|---|---|---|---|
| | | | Sodium salt having sulfonate (Molar concentration) | Sodium salt having oxalate (Molar concentration) | Sodium salt having phosphate (Molar concentration) | Sodium salt having borate (Molar concentration) | |
| Comparative example 1 | PC/EMC (20/80) | NaPF₆ (1) | None | None | None | None | FEC (0.05) |
| Comparative example 2 | PC/EMC (20/80) | NaPF₆ (1) | Na(FSO₂)₂N (0.02) | None | None | None | FEC (0.05) |
| Comparative example 3 | PC/EMC (20/80) | NaPF₆ (1) | None | C₂BF₂NaO₄ (0.03) | None | None | FEC (0.05) |
| Comparative example 4 | PC/EMC (20/80) | NaPF₆ (1) | None | None | NaPO₂F₂ (0.08) | None | FEC (0.05) |
| Comparative example 5 | PC/EMC (20/80) | NaPF₆ (1) | None | None | None | NaBF₄ (0.025) | FEC (0.05) |
| Comparative example 6 | PC/EMC (20/80) | None | Na(FSO₂)₂N (0.0005) | C₂BF₂NaO₄ (0.015) | NaPO₂F₂ (0.03) | NaBF₄ (0.015) | FEC (0.05) |
| Example 1 | PC/EMC (20/80) | NaPF₆ (1) | Na(FSO₂)₂N (0.0005) | C₂BF₂NaO₄ (0.015) | NaPO₂F₂ (0.03) | NaBF₄ (0.015) | FEC (0.05) |
| Example 2 | PC/EMC (20/80) | NaPF₆ (1) | Na(FSO₂)₂N (0.001) | C₂BF₂NaO₄ (0.015) | NaPO₂F₂ (0.03) | NaBF₄ (0.015) | FEC (0.05) |
| Example 3 | PC/EMC (20/80) | NaPF₆ (1) | Na(FSO₂)₂N (0.01) | C₂BF₂NaO₄ (0.015) | NaPO₂F₂ (0.03) | NaBF₄ (0.015) | FEC (0.05) |
| Example 4 | PC/EMC (20/80) | NaPF₆ (1) | Na(FSO₂)₂N (0.03) | C₂BF₂NaO₄ (0.015) | NaPO₂F₂ (0.03) | NaBF₄ (0.015) | FEC (0.05) |
| Example 5 | PC/EMC (20/80) | NaPF₆ (1) | Na(FSO₂)₂N (1) | C₂BF₂NaO₄ (0.015) | NaPO₂F₂ (0.03) | NaBF₄ (0.015) | FEC (0.05) |
| Example 6 | PC/EMC (20/80) | NaPF₆ (1) | Na(FSO₂)₂N (0.15) | C₂BF₂NaO₄ (0.0005) | NaPO₂F₂ (0.03) | NaBF₄ (0.015) | FEC (0.05) |
| Example 7 | PC/EMC (20/80) | NaPF₆ (1) | Na(FSO₂)₂N (0.15) | C₂BF₂NaO₄ (0.001) | NaPO₂F₂ (0.03) | NaBF₄ (0.015) | FEC (0.05) |
| Example 8 | PC/EMC (20/80) | NaPF₆ (1) | Na(FSO₂)₂N (0.15) | C₂BF₂NaO₄ (0.006) | NaPO₂F₂ (0.03) | NaBF₄ (0.015) | FEC (0.05) |
| Example 9 | PC/EMC (20/80) | NaPF₆ (1) | Na(FSO₂)₂N (0.15) | C₂BF₂NaO₄ (0.015) | NaPO₂F₂ (0.03) | NaBF₄ (0.015) | FEC (0.05) |
| Example 10 | PC/EMC (20/80) | NaPF₆ (1) | Na(FSO₂)₂N (0.15) | C₂BF₂NaO₄ (0.08) | NaPO₂F₂ (0.03) | NaBF₄ (0.015) | FEC (0.05) |
| Example 11 | PC/EMC (20/80) | NaPF₆ (1) | Na(FSO₂)₂N (0.15) | C₂BF₂NaO₄ (0.1) | NaPO₂F₂ (0.03) | NaBF₄ (0.015) | FEC (0.05) |
| Example 12 | PC/EMC (20/80) | NaPF₆ (1) | Na(FSO₂)₂N (0.15) | C₂BF₂NaO₄ (0.015) | NaPO₂F₂ (0.0005) | NaBF₄ (0.015) | FEC (0.05) |
| Example 13 | PC/EMC (20/80) | NaPF₆ (1) | Na(FSO₂)₂N (0.15) | C₂BF₂NaO₄ (0.015) | NaPO₂F₂ (0.001) | NaBF₄ (0.015) | FEC (0.05) |
| Example 14 | PC/EMC (20/80) | NaPF₆ (1) | Na(FSO₂)₂N (0.15) | C₂BF₂NaO₄ (0.015) | NaPO₂F₂ (0.01) | NaBF₄ (0.015) | FEC (0.05) |
| Example 15 | PC/EMC (20/80) | NaPF₆ (1) | Na(FSO₂)₂N (0.15) | C₂BF₂NaO₄ (0.015) | NaPO₂F₂ (0.03) | NaBF₄ (0.015) | FEC (0.05) |
| Example 16 | PC/EMC (20/80) | NaPF₆ (1) | Na(FSO₂)₂N (0.15) | C₂BF₂NaO₄ (0.015) | NaPO₂F₂ (0.12) | NaBF₄ (0.015) | FEC (0.05) |
| Example 17 | PC/EMC (20/80) | NaPF₆ (1) | Na(FSO₂)₂N (0.15) | C₂BF₂NaO₄ (0.015) | NaPO₂F₂ (0.15) | NaBF₄ (0.015) | FEC (0.05) |
| Example 18 | PC/EMC (20/80) | NaPF₆ (1) | Na(FSO₂)₂N (0.15) | C₂BF₂NaO₄ (0.015) | NaPO₂F₂ (0.03) | NaBF₄ (0.0005) | FEC (0.05) |
| Example 19 | PC/EMC (20/80) | NaPF₆ (1) | Na(FSO₂)₂N (0.15) | C₂BF₂NaO₄ (0.015) | NaPO₂F₂ (0.03) | NaBF₄ (0.001) | FEC (0.05) |
| Example 20 | PC/EMC (20/80) | NaPF₆ (1) | Na(FSO₂)₂N (0.15) | C₂BF₂NaO₄ (0.015) | NaPO₂F₂ (0.03) | NaBF₄ (0.008) | FEC (0.05) |
| Example 21 | PC/EMC (20/80) | NaPF₆ (1) | Na(FSO₂)₂N (0.15) | C₂BF₂NaO₄ (0.015) | NaPO₂F₂ (0.03) | NaBF₄ (0.015) | FEC (0.05) |
| Example 22 | PC/EMC (20/80) | NaPF₆ (1) | Na(FSO₂)₂N (0.15) | C₂BF₂NaO₄ (0.015) | NaPO₂F₂ (0.03) | NaBF₄ (0.03) | FEC (0.05) |
| Example 23 | PC/EMC (20/80) | NaPF₆ (1) | Na(FSO₂)₂N (0.15) | C₂BF₂NaO₄ (0.015) | NaPO₂F₂ (0.03) | NaBF₄ (0.04) | FEC (0.05) |
| Example 24 | PC/EMC (20/80) | NaPF₆ (1) | Na(FSO₂)₂N (0.485) | C₂BF₂NaO₄ (0.015) | None | None | FEC (0.05) |
| Example 25 | PC/EMC (20/80) | NaPF₆ (1) | Na(FSO₂)₂N (0.3) | C₂BF₂NaO₄ (0.015) | None | None | FEC (0.05) |
| Example 26 | PC/EMC (20/80) | NaPF₆ (1) | Na(FSO₂)₂N (0.15) | C₂BF₂NaO₄ (0.015) | NaPO₂F₂ (0.03) | None | FEC (0.05) |
| Example 27 | PC/EMC (20/80) | NaPF₆ (1) | Na(FSO₂)₂N (0.015) | C₂BF₂NaO₄ (0.015) | NaPO₂F₂ (0.03) | None | FEC (0.05) |
| Example 28 | PC/EMC (20/80) | NaPF₆ (1) | None | C₂BF₂NaO₄ (0.015) | NaPO₂F₂ (0.03) | None | FEC (0.05) |
| Example 29 | PC/EMC (20/80) | NaPF₆ (1) | Na(FSO₂)₂N (0.03) | None | NaPO₂F₂ (0.03) | NaBF₄ (0.015) | FEC (0.05) |
| Example 30 | PC/EMC (20/80) | NaPF₆ (1) | CF₃NaO₃S (0.03) | C₂BF₂NaO₄ (0.015) | NaPO₂F₂ (0.03) | NaBF₄ (0.015) | FEC (0.05) |
| Example 31 | PC/EMC (20/80) | NaPF₆ (1) | Na(FSO₂)₂N (0.03) | C₄BNaO₈ (0.015) | NaPO₂F₂ (0.03) | NaBF₄ (0.015) | FEC (0.05) |
| Example 32 | PC/EMC (20/80) | NaPF₆ (1) | Na(FSO₂)₂N (0.03) | C₂BF₂NaO₄ (0.015) | Na₂PO₃F (0.03) | NaBF₄ (0.015) | FEC (0.05) |
| Example 33 | PC/EMC (20/80) | NaPF₆ (1) | Na(FSO₂)₂N (0.03) | C₂BF₂NaO₄ (0.015) | NaPO₂F₂ (0.03) | BNaO₂ (0.015) | FEC (0.05) |
| Example 34 | PC/DEC (20/80) | NaPF₆ (1) | Na(FSO₂)₂N (0.03) | C₂BF₂NaO₄ (0.015) | NaPO₂F₂ (0.03) | NaBF₄ (0.015) | FEC (0.05) |
| Example 35 | PC/EMC/DEC (20/60/20) | NaPF₆ (1) | Na(FSO₂)₂N (0.03) | C₂BF₂NaO₄ (0.015) | NaPO₂F₂ (0.03) | NaBF₄ (0.015) | FEC (0.05) |
| Example 36 | PC/EMC/EP (20/60/20) | NaPF₆ (1) | Na(FSO₂)₂N (0.03) | C₂BF₂NaO₄ (0.015) | NaPO₂F₂ (0.03) | NaBF₄ (0.015) | FEC (0.05) |
| Example 37 | PC/EMC/DG (20/60/20) | NaPF₆ (1) | Na(FSO₂)₂N (0.03) | C₂BF₂NaO₄ (0.015) | NaPO₂F₂ (0.03) | NaBF₄ (0.015) | FEC (0.05) |
| Example 38 | PC/EP/DG (20/60/20) | NaPF₆ (1) | Na(FSO₂)₂N (0.03) | C₂BF₂NaO₄ (0.015) | NaPO₂F₂ (0.03) | NaBF₄ (0.015) | FEC (0.05) |
| Example 39 | PC/EMC/EP/D G (20/50/20/10) | NaPF₆ (1) | Na(FSO₂)₂N (0.03) | C₂BF₂NaO₄ (0.015) | NaPO₂F₂ (0.03) | NaBF₄ (0.015) | FEC (0.05) |
| Example 40 | PC/EMC (20/80) | NaAsF₆ (1) | Na(FSO₂)₂N (0.485) | C₂BF₂NaO₄ (0.015) | NaPO₂F₂ (0.03) | NaPO₂F₂ (0.03) | FEC (0.05) |
| Example 41 | PC/EMC (20/80) | NaClO₄ (1) | Na(FSO₂)₂N (0.485) | C₂BF₂NaO₄ (0.015) | NaPO₂F₂ (0.03) | NaPO₂F₂ (0.03) | FEC (0.05) |
| Example 42 | PC/EMC (20/80) | CF₃COONa (1) | Na(FSO₂)₂N (0.485) | C₂BF₂NaO₄ (0.015) | NaPO₂F₂ (0.03) | NaPO₂F₂ (0.03) | FEC (0.05) |
| Example 43 | PC/EMC (20/80) | CF₃COONa (1) | Na(FSO₂)₂N (0.485) | C₂BF₂NaO₄ (0.015) | NaPO₂F₂ (0.03) | NaPO₂F₂ (0.03) | None |

The abbreviations in Table 1 are described below.

The abbreviations of the solvents are as follows: PC: propylene carbonate; EMC: ethyl methyl carbonate; DEC: diethyl carbonate; EP: ethyl propionate; and DG: diethylene glycol dimethyl ether.

The abbreviations of the sodium salts are as follows: NaPF₆: sodium hexafluorophosphate; NaAsF₆: sodium hexafluoroarsenate; NaClO₄: sodium perchlorate; C₂F₃NaO₂: sodium trifluoroacetate; Na(FSO₂)₂N: sodium bis(fluorosulfonyl)imide; CF₃NaO₃S: sodium trifluoromethanesulfonate; C₂BF₂NaO₄: sodium difluoro(oxalate)borate; C₄BNaO₈: sodium bis(oxalate)borate; NaPO₂F₂: sodium difluorophosphate; Na₂PO₃F: sodium monofluorophosphate; NaBF₄: sodium tetrafluoroborate; and BNaO₂: sodium metaborate.

The abbreviation of the additive is as follows: FEC: fluoroethylene carbonate.

The substances involved in the table are all chemically pure and commercially available.

Test processes for the relevant parameters are described below.

### 1. Test for internal resistance mΩ of sodium-ion battery

At 25°C, the sodium-ion battery was charged to 4.2 V at a constant current of 1C, then charged to a current less than 0.05C at a constant voltage of 4.2 V, and discharged at a current of 1C for 30 min. That is, the capacity of the cell was adjusted to 50% SOC. Then, positive and negative probes of a TH2523A AC internal resistance tester were in contact with positive and negative electrodes of the battery respectively, and an internal resistance value of the battery was read through the internal resistance tester.

### 2. Test for capacity retention rate after 500 cycles at 25°C

At 25°C, the sodium-ion battery was charged to 4.2 V at a constant current of 1C, then charged to a current less than 0.05C at a constant voltage of 4.2 V, discharged to 1.5 V at a constant current of 1C, and then discharged to 1.5 V at a constant current of 0.04C. This was a charge and discharge process. The charge and discharge process was repeated in this way, and a capacity retention rate of the sodium-ion battery after 500 cycles was calculated. The specific calculation formula was as follows: Capacity retention rate (%) of sodium-ion battery after 500 cycles at 25°C=(discharge capacity at the 500th cycle/discharge capacity at the first cycle)×100%.

### 3. Test for capacity retention rate after 500 cycles at 45°C

At 45°C, the sodium-ion battery was charged to 4.2 V at a constant current of 1C, then charged to a current less than 0.05C at a constant voltage of 4.2 V, discharged to 1.5 V at a constant current of 1C, and then discharged to 1.5 V at a constant current of 0.04C. This was a charge and discharge process. The charge and discharge process was repeated in this way, and a capacity retention rate of the sodium-ion battery after 500 cycles was calculated. The specific calculation formula was as follows: Capacity retention rate (%) of sodium-ion battery after 500 cycles at 45°C=(discharge capacity at the 500th cycle/discharge capacity at the first cycle)×100%.

### 4. Test for capacity retention rate after high-temperature storage

At 25°C, the sodium-ion battery was discharged to 1.5 V at a constant current of 1/3C, then charged to 4.2 V at a constant current of 1/3C, charged to a current less than 0.05C at a constant voltage of 4.2 V, and then stored in a thermostat at a high temperature of 60°C for 2 months. Then, the sodium-ion battery after high-temperature storage was cooled to 25°C and discharged to 1.5 V at a constant current of 1/3C. A capacity retention rate of the sodium-ion battery after stored at 4.2 V at 60°C was calculated. The specific calculation formula was as follows: Capacity retention rate (%) of sodium-ion battery after high-temperature storage at 65°C=(discharge capacity after high-temperature storage at 25°C/discharge capacity at the first cycle at 25°C)×100%.

### 5. Test for volume swelling after high-temperature storage

At 25°C, the sodium-ion battery was charged to a voltage of 4.2 V at a constant current of 1C, and then charged to a current of 0.05C at a constant voltage of 4.2 V. The volume of the sodium-ion battery at that point was tested and denoted as V1. Then, the fully charged sodium-ion battery was put into a thermostat at 60°C and stored for 2 months. The volume was tested using the drainage method and denoted as V2.

Volume swelling rate (%) of sodium-ion battery after stored at 60°C for 2 months=(V2-V1)/V1×100%.

Test results of examples and comparative examples are described below.

**Table 2 Performance of sodium-ion batteries in examples and comparative examples**

| No. | Initial internal resistance of sodium-ion battery (mΩ) | Capacity retention rate after 500 cycles at 25°C (%) | Capacity retention rate after 500 cycles at 45°C (%) | Capacity retention rate after high-temperature storage (%) | Battery volume swelling rate after high-temperature storage (%) |
|---|---|---|---|---|---|
| Comparative example 1 | 21 | 65 | 52 | 65 | 41.2 |
| Comparative example 2 | 22 | 69 | 60 | 74 | 36.3 |
| Comparative example 3 | 22 | 68 | 57 | 75 | 35.4 |
| Comparative example 4 | 21 | 68 | 58 | 74 | 35.1 |
| Comparative example 5 | 22 | 69 | 61 | 72 | 37.0 |
| Comparative example 6 | 22 | 40 | 32 | 30 | 38.2 |
| Example 1 | 23 | 75 | 70 | 73 | 18.1 |
| Example 2 | 23 | 75 | 71 | 73 | 18.0 |
| Example 3 | 23 | 78 | 75 | 76 | 15.1 |
| Example 4 | 23 | 84 | 83 | 85 | 8.2 |
| Example 5 | 26 | 75 | 72 | 72 | 18.6 |
| Example 6 | 24 | 76 | 71 | 73 | 19.5 |
| Example 7 | 24 | 77 | 71 | 74 | 19.4 |
| Example 8 | 24 | 79 | 74 | 77 | 16.3 |
| Example 9 | 24 | 82 | 80 | 83 | 9.1 |
| Example 10 | 24 | 78 | 73 | 76 | 13.4 |
| Example 11 | 25 | 72 | 69 | 72 | 16.5 |
| Example 12 | 23 | 75 | 70 | 73 | 17.2 |
| Example 13 | 23 | 75 | 71 | 73 | 17.0 |
| Example 14 | 23 | 77 | 76 | 77 | 15.6 |
| Example 15 | 23 | 83 | 82 | 84 | 8.5 |
| Example 16 | 24 | 78 | 76 | 77 | 13.6 |
| Example 17 | 24 | 71 | 72 | 74 | 15.8 |
| Example 18 | 23 | 74 | 70 | 74 | 16.8 |
| Example 19 | 23 | 74 | 71 | 75 | 16.5 |
| Example 20 | 23 | 77 | 75 | 79 | 14.5 |
| Example 21 | 23 | 84 | 83 | 85 | 8.2 |
| Example 22 | 24 | 83 | 82 | 83 | 9.2 |
| Example 23 | 24 | 83 | 81 | 81 | 9.8 |
| Example 24 | 23 | 74 | 69 | 73 | 16.9 |
| Example 25 | 23 | 75 | 70 | 75 | 16.3 |
| Example 26 | 23 | 77 | 76 | 78 | 14.5 |
| Example 27 | 23 | 76 | 75 | 76 | 14.9 |
| Example 28 | 23 | 74 | 70 | 74 | 16.8 |
| Example 29 | 23 | 78 | 77 | 78 | 13.4 |
| Example 30 | 24 | 82 | 79 | 83 | 10.2 |
| Example 31 | 24 | 81 | 80 | 81 | 11.3 |
| Example 32 | 24 | 82 | 80 | 82 | 10.5 |
| Example 33 | 24 | 79 | 78 | 79 | 12.7 |
| Example 34 | 24 | 82 | 81 | 82 | 10.1 |
| Example 35 | 24 | 83 | 82 | 83 | 9.4 |
| Example 36 | 24 | 81 | 80 | 80 | 11.2 |
| Example 37 | 24 | 82 | 81 | 81 | 11.6 |
| Example 38 | 24 | 80 | 79 | 79 | 12.4 |
| Example 39 | 25 | 83 | 81 | 80 | 11.3 |
| Example 40 | 24 | 76 | 74 | 74 | 14.4 |
| Example 41 | 24 | 78 | 76 | 78 | 13.9 |
| Example 42 | 24 | 73 | 71 | 74 | 15.6 |
| Example 43 | 22 | 68 | 59 | 69 | 29.2 |

It can be seen from the data in Tables 1 and 2 that as compared with Comparative Examples 1 to 6, in Examples 1 to 43, under a condition that the equivalent internal resistance of the battery is guaranteed, the battery volume swelling rate after high-temperature storage is significantly reduced, while the room-temperature and high-temperature cycling performance and the capacity retention rate after high-temperature storage are improved.

According to the experimental results of Comparative Example 1, it can be seen that even with the presence of a film-forming additive FEC, the cycling performance at 25°C of the sodium-ion battery based on the ester-based electrolyte is still relatively poor. When the temperature rises to 45°C, the capacity retention rate of the sodium-ion battery after 500 cycles is significantly reduced. More seriously, the volume swelling rate of the sodium-ion battery after stored at a high temperature for 2 months is relatively high. This is because in the charge and discharge process of the sodium-ion battery, the electrolyte undergoes severe decomposition and generates a large amount of gas, leading to serious safety hazards of the sodium-ion battery during use.

It can be seen from Comparative Examples 2 to 5 that after a second sodium salt containing electron-rich anions (having sulfonate/oxalate/phosphate/borate) is added into the electrolyte in Comparative Example 1, the capacity retention rate of the sodium-ion battery after 500 cycles at 25°C and 45°C and the capacity retention rate after high-temperature (60°C) storage are improved, while the volume swelling rate of the battery is reduced. This indicates that the addition of the second sodium salt containing electron-rich anions can suppress the decomposition of the electrolyte and the accompanying gas generation to some extent. This is because the electron-rich anions participate in the solvation structure of sodium ions and provide some electrons to the sodium ions, thereby weakening the strong electron attraction capability of the sodium ions on the solvent molecules in the electrolyte, alleviating the weakening of chemical bonds in the solvent molecules, and thus suppressing the decomposition of the solvent molecules and the accompanying gas generation. However, the addition of a single sodium salt containing electron-rich anions does not have a significant suppressing effect, which may be related to factors such as the number, size, electron-donating capability, and film formation of the anions.

It can be seen from Comparative Example 6 that when the first sodium salt (NaPF₆) is removed from the electrolyte, the cycling performance of the sodium-ion battery at 25°C and 45°C and the capacity retention rate after high-temperature storage at 60°C are significantly reduced. This indicates that the first sodium salt plays an indispensable role in the overall electrochemical performance of the sodium-ion battery, and the combined use of the first sodium salt with the second sodium salt can synergistically improve the electrochemical performance of the sodium-ion battery. In addition, the amount of the second sodium salt also affects the electrochemical performance of the sodium-ion battery to some extent.

It can be seen from Examples 1 to 5 that after 0.0005 M and 0.001 M second sodium salts (Na(FSO₂)₂N) having sulfonate are added into the electrolyte (in Examples 1 and 2), the cycling performance of the battery at 25°C and 45°C is improved, the capacity retention rate after high-temperature storage at 60°C is significantly increased, and the battery volume swelling rate of the battery after high-temperature storage is significantly reduced, but such a low amount of the second sodium salt (Na(FSO₂)₂N) has a poor regulatory effect on the electrolyte. It should be noted that after 0.01 M and 0.03 M second sodium salts (Na(FSO₂)₂N) are added (in Examples 3 and 4), the electrochemical performance of the sodium-ion battery is further improved. As compared with Comparative Examples 1 to 6, various performance of the sodium-ion battery is significantly improved. It can be seen from Example 5 that when the addition amount of the second sodium salt (Na(FSO₂)₂N) is 1 M, the resistance of the sodium-ion battery increases. This is because the excessive addition of the second sodium salt leads to excessive film formation and deterioration of the interface resistance, thereby affecting the kinetic process of the sodium-ion battery.

In addition to the second sodium salt having sulfonate, the second sodium salt having oxalate also affects the electrochemical performance of the sodium-ion battery to some extent. It can be seen from Examples 6 to 11 that after 0.0005 M second sodium salt (C₂BF₂NaO₄) having oxalate is added, the electrochemical performance of the sodium-ion battery can be improved to some extent. After the addition amount exceeds 0.015 M, the electrochemical performance of the corresponding battery deteriorates, indicating that excessive addition may affect the interface impedance and kinetic process of the sodium-ion battery.

In addition, it can be seen from Examples 12 to 23 that the addition of the second sodium salt containing electron-rich anions (having phosphate/borate) can also improve the electrochemical performance of the sodium-ion battery.

In addition, it can be seen from Examples 24 to 29 that the combination of the second sodium salts having sulfonate, oxalate, phosphate, and borate can improve the cycling performance at 25°C/45°C, high-temperature storage performance, and volume swelling rate at high temperatures of the sodium-ion battery to some extent.

It can be seen from Examples 30 to 33 that changing the types of the second sodium salts having sulfonate, oxalate, phosphate, and borate also has a similar improvement effect on the electrochemical performance of the sodium-ion battery.

It can be seen from Examples 34 to 39 that in addition to carbonate solvents, the addition of the second sodium salts containing electron-rich anions (having sulfonate, oxalate, phosphate, and borate) in the electrolyte containing carboxylate and ether solvents also has a similar suppressing effect on the decomposition and gas generation of the electrolyte of the sodium-ion battery, and facilitates the improvement of the electrochemical performance of the sodium-ion battery (especially at high temperatures). This indicates that the addition of the second sodium salt can have a good regulatory effect on the solvation process of sodium ions and the chemical environment of solvent molecules in the electrolyte, and is likely to form a thin and dense solid electrolyte interface film mainly composed of inorganic components, thereby effectively suppressing the decomposition of the solvent in the electrolyte and the accompanying gas generation, and improving the electrochemical performance of the sodium-ion battery. In addition, even after four second sodium salts containing electron-rich anions (having sulfonate, oxalate, phosphate, and borate) are added into the electrolyte simultaneously, the change in the impedance value of the sodium-ion battery is not significant, indicating that the simultaneous use of the sodium salts containing electron-rich anions has a relatively small possibility of affecting the impedance of the sodium-ion battery.

It can be seen from Examples 40 to 42 that the combined use of the second sodium salt with other types of first sodium salts can also improve the electrochemical performance of the sodium-ion battery to some extent. Meanwhile, it has been found that after different types of first sodium salts are used in the electrolyte, the electrochemical performance of the sodium-ion battery has some differences.

In addition, it can be seen from Example 43 that after the additive FEC is removed from the electrolyte, the electrochemical performance of the sodium-ion battery deteriorates, indicating that the additive in the electrolyte participates in the formation of the electrode/electrolyte interface film in the sodium-ion battery and also plays an important role in improving the electrochemical performance of the sodium-ion battery.

The sodium-ion battery non-aqueous electrolyte and sodium-ion battery of this application have a certain specificity in solving the problems of electrolyte decomposition and gas generation of the sodium-ion battery during actual use, and have good applicability in the industrialization process.

It should be noted that this application is not limited to the foregoing embodiments. The foregoing embodiments are merely examples, and embodiments having substantially the same constructions and having the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A non-aqueous electrolyte, comprising: a first sodium salt, wherein the first sodium salt comprises at least one of sodium hexafluorophosphate, sodium hexafluoroarsenate, sodium perchlorate, and sodium trifluoroacetate, and optionally, the first sodium salt is sodium hexafluorophosphate; and a second sodium salt, wherein the second sodium salt comprises one, two, or more of a sodium salt having sulfonate, a sodium salt having oxalate, a sodium salt having phosphate, and a sodium salt having borate, and optionally, the second sodium salt comprises a sodium salt having sulfonate, a sodium salt having oxalate, a sodium salt having phosphate, and a sodium salt having borate.

2. The non-aqueous electrolyte according to claim 1, **characterized in that** in the non-aqueous electrolyte, a molar concentration ratio of the first sodium salt to the second sodium salt is greater than or equal to 1/1, optionally greater than or equal to 3/1 and less than or equal to 40/1, and more optionally less than or equal to 15/1.

3. The non-aqueous electrolyte according to claim 1 or 2, **characterized in that** the sodium salt having sulfonate comprises at least one of sodium fluorosulfonate, sodium trifluoromethanesulfonate, sodium bis(fluorosulfonyl)imide, sodium bis(trifluoromethanesulfonyl)imide, sodium methanesulfonate, sodium vinylsulfonate, sodium methanesulfate, sodium methanethiosulfonate, sodium 1,2-ethanediyl disulfonate, sodium ethylsulfate, sodium propanesulfonate, sodium ethylthiosulfonate, sodium 2-iodobenzenesulfonate, sodium 4-nitrobenzenesulfonate, sodium styrenesulfonate, sodium 4-isopropylbenzenesulfonate, sodium phenolsulfonate, sodium β-styrenesulfonate, sodium cyclohexanesulfonate, sodium 2-cyclohexylaminoethanesulfonate, sodium 4-amino-N-methylbenzenesulfonamide, sodium poly(dithiodipropanesulfonate), sodium pyridin-3-sulfonate, and sodium piperazine-1,4-diethanesulfonate; and optionally, the sodium salt having sulfonate comprises at least one of sodium fluorosulfonate, sodium trifluoromethanesulfonate, sodium bis(fluorosulfonyl)imide, sodium bis(trifluoromethanesulfonyl)imide, sodium methanesulfonate, and sodium methanesulfate.

4. The non-aqueous electrolyte according to any one of claims 1 to 3, **characterized in that** a concentration of the sodium salt having sulfonate in the non-aqueous electrolyte is within a range of 0.0005-1 mol/L, optionally within a range of 0.01-0.3 mol/L.

5. The non-aqueous electrolyte according to any one of claims 1 to 4, **characterized in that** the sodium salt having oxalate comprises at least one of sodium oxalate, sodium bis(oxalate)borate, sodium difluoro(oxalate)borate, sodium tetrafluoro(oxalate)phosphate, and sodium difluoro bis(oxalate)phosphate; and optionally, the sodium salt having oxalate comprises at least one of sodium oxalate, sodium bis(oxalate)borate, sodium difluoro(oxalate)borate, sodium tetrafluoro(oxalate)phosphate, and sodium difluoro bis(oxalate)phosphate.

6. The non-aqueous electrolyte according to any one of claims 1 to 5, **characterized in that** a concentration of the sodium salt having oxalate in the non-aqueous electrolyte is within a range of 0.0005-0.1 mol/L, optionally within a range of 0.006-0.08 mol/L, and further optionally within a range of 0.01-0.02 mol/L.

7. The non-aqueous electrolyte according to any one of claims 1 to 6, **characterized in that** the sodium salt having phosphate comprises at least one of sodium difluorophosphate, sodium monofluorophosphate, sodium trimetaphosphate, sodium hexametaphosphate, sodium hydroxyethane diphosphonate, clodronate disodium, olpadronate sodium, sodium diethylenetriamine penta(methylenephosphonate), sodium tripolyphosphate, and disodium phenyl phosphate; and optionally, the sodium salt having phosphate comprises at least one of sodium difluorophosphate and sodium fluorophosphate.

8. The non-aqueous electrolyte according to any one of claims 1 to 7, **characterized in that** a concentration of the sodium salt having phosphate in the non-aqueous electrolyte is within a range of 0.0005-0.12 mol/L, optionally within a range of 0.01-0.05 mol/L, and more optionally within a range of 0.01-0.03 mol/L.

9. The non-aqueous electrolyte according to any one of claims 1 to 8, **characterized in that** the sodium salt having borate comprises at least one of sodium tetrafluoroborate, sodium metaborate, sodium tetraphenylborate, and sodium tetrakis[3,5-bis(trifluoromethyl)phenyl]borate; optionally, the sodium salt having borate comprises at least one of sodium tetrafluoroborate, sodium metaborate, and sodium tetraphenylborate; and further optionally, the sodium salt having borate comprises at least one of sodium tetrafluoroborate and sodium metaborate.

10. The non-aqueous electrolyte according to any one of claims 1 to 9, **characterized in that** a concentration of the sodium salt having borate in the non-aqueous electrolyte is within a range of 0.0005-0.05 mol/L, optionally within a range of 0.01-0.04 mol/L.

11. The non-aqueous electrolyte according to any one of claims 1 to 10, **characterized in that** in the first sodium salt, when sodium hexafluorophosphate is used in combination with at least one of sodium hexafluoroarsenate, sodium perchlorate, and sodium trifluoroacetate, a concentration of other sodium salts than sodium hexafluorophosphate in the non-aqueous electrolyte is greater than or equal to 0.001 mol/L, optionally greater than or equal to 0.01 mol/L, further optionally greater than or equal to 0.03 mol/L and less than or equal to 1 mol/L, and optionally less than or equal to 0.5 mol/L.

12. The non-aqueous electrolyte according to any one of claims 1 to 11, **characterized in that** the second sodium salt comprises a sodium salt having sulfonate and further comprises at least one of a sodium salt having oxalate, a sodium salt having phosphate, and a sodium salt having borate.

13. The non-aqueous electrolyte according to any one of claims 1 to 12, **characterized in that** the second sodium salt comprises a sodium salt having sulfonate and a sodium salt having oxalate; and optionally, a molar ratio of the sodium salt having sulfonate to the sodium salt having oxalate is 0.03/1 to 70/1, optionally 0.5/1 to 20/1.

14. The non-aqueous electrolyte according to any one of claims 1 to 13, **characterized in that** the non-aqueous electrolyte comprises cyclic carbonate, wherein a mass concentration percentage of the cyclic carbonate in the non-aqueous electrolyte is greater than or equal to 10%, optionally greater than or equal to 15% and less than or equal to 60%.

15. The non-aqueous electrolyte according to any one of claims 1 to 14, **characterized in that** the non-aqueous electrolyte comprises linear carbonate and linear carboxylate, wherein a sum of mass percentages of the linear carbonate and the linear carboxylate in the non-aqueous electrolyte is greater than or equal to 40%, optionally greater than or equal to 50%, more optionally greater than or equal to 60% and less than or equal to 90%, optionally less than or equal to 85%, and further optionally less than or equal to 80%.

16. The non-aqueous electrolyte according to any one of claims 1 to 15, **characterized in that** the non-aqueous electrolyte comprises at least one cyclic carbonate and at least one linear ester, wherein a mass percentage ratio of the at least one cyclic carbonate to the at least one linear ester is greater than or equal to 0.1:1 and less than or equal to 1.5:1, optionally less than or equal to 1:1, and more optionally 0.2:1 to 1:1.

17. The non-aqueous electrolyte according to any one of claims 1 to 16, **characterized in that** the non-aqueous electrolyte comprises at least one of the following substance combinations: a combination of cyclic carbonate and linear carbonate; a combination of cyclic carbonate and linear carboxylate; a combination of cyclic carbonate and ether; a combination of linear carbonate and linear carboxylate; a combination of linear carbonate and ether; a combination of linear carboxylate and ether; a combination of cyclic carbonate, linear carbonate, and linear carboxylate; a combination of cyclic carbonate, linear carbonate, and ether; a combination of cyclic carbonate, linear carboxylate, and ether; and a combination of linear carbonate, linear carboxylate, and ether.

18. The non-aqueous electrolyte according to any one of claims 1 to 17, **characterized in that** a non-aqueous solvent in the non-aqueous electrolyte comprises at least one of propylene carbonate, ethyl methyl carbonate, ethyl acetate, diethyl carbonate, methyl propionate, ethyl propionate, diethylene glycol dimethyl ether, and fluoroethylene carbonate.

19. The non-aqueous electrolyte according to any one of claims 1 to 18, **characterized in that** the non-aqueous electrolyte comprises one or more of an anhydride additive, a fluorine-containing organic additive, a nitrile additive, an organosilicon additive, an aldehyde additive, a sulfur-containing additive, a lithium salt additive, and a potassium salt additive; and optionally, a sum of mass percentages of these additives in the non-aqueous electrolyte is greater than or equal to 0.001%, optionally greater than or equal to 0.2% and less than or equal to 5%, and optionally less than or equal to 4%.

20. A sodium-ion battery, comprising a positive electrode plate, a negative electrode plate, and the non-aqueous electrolyte according to any one of claims 1 to 19.

21. An electric apparatus, comprising the non-aqueous electrolyte according to any one of claims 1 to 19 or the sodium-ion battery according to claim 20.
